# EUROPEAN PATENT APPLICATION

(11) **EP 1 949 996 A2**
(43) Date of publication of application: **30.07.2008**
(21) Application number: 08250303.8
(22) Date of filing: 24.01.2008
(51) Int. Cl.: B23K 1/00

(54) **Diffusion braze repair of metal components**

(30) Priority: 25.01.2007 US 657788
(71) Applicant: United Technologies Corporation, Hartford, CT 06101 (US)
(72) Inventor: Minor, Michael J, Arlington, TX 76018 (US); Pellet, Paul M., Arlington, TX 76006 (US); Bischof, Christopher J., Southlake, TX 76092 (US)
(74) Representative: Leckey, David Herbert

(57) **Abstract**

A method for repairing a metal component having a crack, the method comprising depositing (14) a brazing material into the crack of the metal component, and exposing the metal component to a plurality of heating cycles (16, 18, 20). Each successive heating cycle has a temperature that is less than a temperature of a previous heating cycle, and a duration that is at least as long as a duration of the previous heating cycle. The plurality of heating cycles comprises an initial heating cycle (16) having a temperature sufficient to at least substantially melt the brazing material within the crack.

## Description

### BACKGROUND

The present invention relates to methods for repairing metal components. In particular, the present invention relates to methods of diffusion braze repairing metal components derived from single crystal alloys.

Single crystal alloys (e.g., nickel, cobalt, and iron-based superalloys) are typically employed in gas turbine engine components due to the high mechanical strengths and creep resistances obtained with such alloys. Because gas turbine engine components are exposed to extreme temperatures and pressures, high mechanical strengths and creep resistances are required to preserve the integrity of the engine over the course of operation. However, over time, such engine components develop cracks on the component surfaces and/or interior regions that require repairs.

Engine cracks are typically repaired with brazing operations, which subject the single crystal alloys of the engine components to high temperatures (e.g., 2200°F (1204°C)) for extended durations (e.g., 10 hours). Exposure to the high temperatures for the extended durations, however, reduces the low-temperature (e.g., 1500°F-1600°F (816-871°C)) creep resistances of the single crystal alloys. This is believed to be due to coarsening of the gamma prime (γ') phases of the single crystal alloys, which is measurable by increases in the average particle sizes of the γ' phases. The reduction of the low-temperature creep resistances can cause the alloy structures of the engine components to creep under the applied temperatures and pressures during operation, thereby potentially damaging the engine components. As such, there is a need for a repair process that is suitable for repairing cracks in components formed from single crystal alloys, and which also substantially preserves the low-temperature creep resistances of the single crystal alloys.

### SUMMARY

The present invention relates to a method for repairing a metal component having a crack. In one aspect of the invention, the method initially includes depositing a brazing material into the crack. The metal component is then exposed to a plurality of heating cycles, where each successive heating cycle has a temperature that is less than a temperature of a previous heating cycle, and a duration that is at least as long as a duration of the previous heating cycle. An initial heating cycle of the heating cycles has a high temperature sufficient to at least substantially melt the brazing material within the crack during the initial heating cycle.

### BRIEF DESCRIPTION OF THE DRAWINGS

FIG. 1 is flow diagram of a method for repairing a crack in a metal component.
FIG. 2 is a micrograph of a brazed metal component, which was repaired pursuant to a method of the present invention.

### DETAILED DESCRIPTION

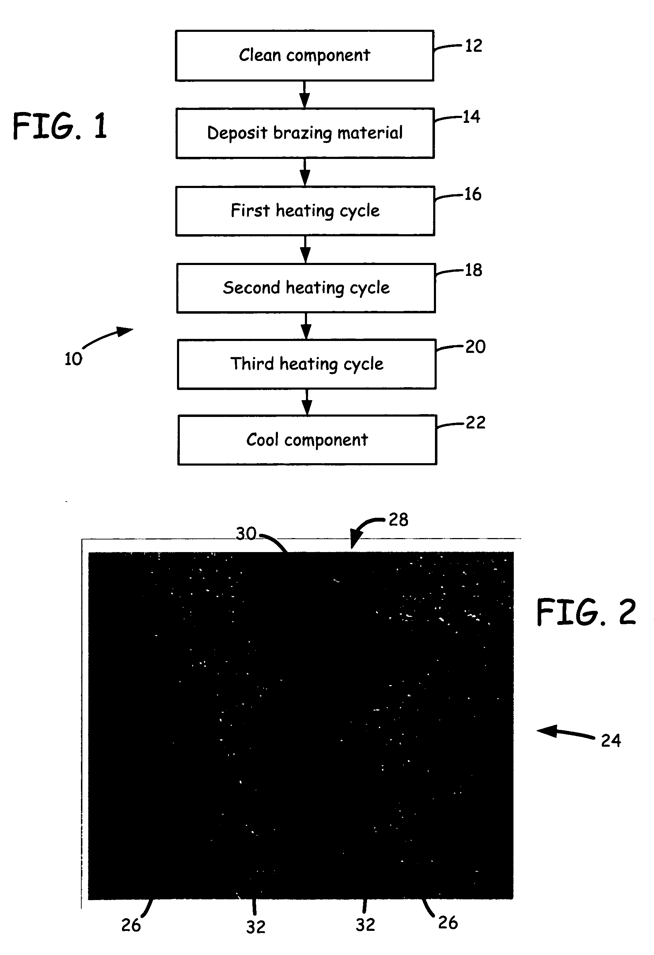

FIG. 1 is a flow diagram of method 10 for repairing a crack in a metal component. Method 10 includes steps 12-22, and initially involves cleaning the metal component to remove any oxide residue (step 12), especially in and proximate to the crack. As discussed above, during operation, gas turbine engine components are exposed to extreme temperatures. Operating at such high temperatures in an oxygen-containing atmosphere results in the formation of an oxide layer on the surface of the component and the interior walls of any crack which may form. Such oxide layers effectively function as diffusion barriers, thereby preventing brazing alloys from bonding to the walls of the crack. The oxide layer may be removed by cleaning the metal component, particularly the walls of the crack, with hydrogen fluoride gas. The cleaning process is desirably continued for a sufficient duration to at least substantially remove the oxide layer from the walls of the crack.

After the metal component is cleaned, a brazing material is then deposited within the crack of the metal component (step 14). The brazing material desirably has a composition that is similar to, or is the same as, the alloy of the metal component. Suitable materials for the metal component and the brazing material include single crystal alloys, such as nickel-based alloys and superalloys (e.g., PWA 1484 alloy), chromium-based alloys and superalloys, and iron-based alloys and superalloys. Additional suitable materials for the brazing material include substantially pure metals, such as non-alloyed nickel, cobalt, and iron.

The brazing material may be supplied in a variety of media, such as powders and granules. The brazing material may be deposited with a variety of techniques, such as by manual filling, or with deposition systems, extrusion systems, and injection systems. The amount of the brazing material deposited into the crack is desirably enough to fill at least a majority of the crack. Preferably, enough of the brazing material is deposited into the crack to at least substantially fill the crack.

After the crack is filled with the brazing material, the metal component is then subjected to a series of heating cycles, which melt and diffuse the brazing material into the walls of the crack. This seals the crack with a brazed weld. As discussed below, the heating cycles successively decrease the exposure temperature, and maintain or increase the exposure durations, thereby substantially preserving the low-temperature creep resistances of the single crystal alloys. The heating cycles are desirably performed under reduced pressure, such as in a vacuum furnace. Examples of suitable reduced pressures include about 1 Torr or less, with particularly suitable pressures including about 0.001 Torr or less. Alternatively, the heating cycles may be performed under partial pressure in an inert-gas atmosphere (e.g., argon gas).

The first heating cycle involves exposing the metal component to one or more temperatures within a first temperature range (step 16). The one or more temperatures within the first temperature range are referred to herein as "first temperatures", with the understanding that the term "first temperatures" refers to a single temperature within the first temperature range, and to multiple temperatures within the first temperature range. The first temperatures are desirably high enough to at least substantially melt the brazing material within the crack of the metal component. Examples of suitable first temperatures include at least about 1170°C (about 2140°F), with particularly suitable first temperatures ranging from about 1200°C (about 2200°F) to about 1260°C (about 2300°F), and with even more particularly suitable first temperatures ranging from about 1200°C (about 2200°F) to about 1230°C (about 2250°F).

The metal component is exposed to the first temperatures for a first duration. Examples of suitable first durations for the first heating cycle include about 45 minutes or less, with particularly suitable durations for the first heating cycle ranging from about 15 minutes to about 30 minutes. The high intensities of the first temperatures melt the brazing material within the crack. However, because the first duration is relatively short (compared to standard diffusion brazing cycles, e.g., 10 hours), the γ' phases of the single crystal alloys remain substantially non-coarsened (i.e., the average particle sizes are not substantially increased). As a result, the low-temperature creep resistances of the alloys are substantially preserved after the first heating cycle.

After the first duration ends, the metal component is then subjected to a second heating cycle. The second heating cycle involves exposing the metal component to one or more temperatures within a second temperature range that is lower than the first temperatures of the first heating cycle (step 18). The one or more temperatures within the second temperature range are referred to herein as "second temperatures", with the understanding that the term "second temperatures" refers to a single temperature within the second temperature range, and to multiple temperatures within the second temperature range. Examples of suitable second temperatures range from about 1150°C (about 2100°F) to about 1200°C (about 2200°F), with particularly suitable second temperatures ranging from about 1160°C (about 2115°F) to about 1190°C (about 2165°F).

The transition between the first heating cycle and the second heating cycle may be accomplished by reducing the temperature in the heating system (e.g., vacuum furnace) from the first temperatures to the second temperatures. Suitable rates of temperature reduction generally depend on the differential between the first and second temperatures, and may range from about 1°C/minute to about 30°C/minute. Alternatively, the metal component may be cooled from the first temperatures to a lower temperature (e.g., room temperature) and then heated up to the second temperatures. However, transitioning directly from the first temperatures to the second temperatures reduces the time required to braze the metal component, which reduces the required repair time.

The metal component is exposed to the second temperatures for a second duration that is at least as long as the first duration. In one embodiment, the second duration is longer than the first duration. Examples of suitable second durations for the second heating cycle range from about 15 minutes to about 90 minutes, with particularly suitable durations for the second heating cycle ranging from about 30 minutes to about 60 minutes.

The second heating cycle allows the brazing alloy to remain in a substantially-melted stated. This allows the melted brazing alloy to diffuse into the alloy of the metal component at the walls of the crack. Furthermore, the lowered temperatures of the second heating cycle (i.e., the second temperatures) do not coarsen the γ' phases of the single crystal alloys to the same extent as the higher temperatures of the first heating cycle. As such, the metal component may be exposed to the second temperatures for longer durations while substantially preserving low-temperature creep resistances of the single crystal alloys.

After the second duration ends, the metal component is then subjected to a third heating cycle. The third heating cycle involves exposing the metal component to one or more temperatures within a third temperature range that is lower than the second temperatures of the second heating cycle (step 20). Accordingly, due to the relationship between the first and second heating cycles, the third temperatures are also lower than the first temperatures. The one or more temperatures within the third temperature range are referred to herein as "third temperatures", with the understanding that the term "third temperatures" refers to a single temperature within the third temperature range, and to multiple temperatures within the third temperature range. Examples of suitable third temperatures range from about 1090°C (about 2000°F) to about 1150°C (about 2100°F), with particularly suitable third temperatures ranging from about 1120°C (about 2050°F) to about 1150°C (about 2100°F).

The transition between the second heating cycle and the third heating cycle may be accomplished in the same manners as discussed above for the transition between the first heating cycle and the second heating cycle. The metal component is exposed to the third temperatures for a third duration that is at least as long as the second duration. In one embodiment, the third duration is longer than the second duration (and correspondingly, the first duration). Examples of suitable third durations for the third heating cycle include at least about 4 hours, with particularly suitable durations for the third heating cycle ranging from about 5 hours to about 7 hours.

The third heating cycle also allows the brazing alloy to remain in a substantially-melted stated, thereby allowing the melted brazing alloy to continue to diffuse into the alloy of the metal component at the walls of the crack. Furthermore, the lowered temperatures of the third heating cycle (i.e., the third temperatures) do not coarsen the γ' phases of the single crystal alloys to the same extent as the higher temperatures of the first and second heating cycles. As such, the metal component may be exposed to the third temperatures for even longer durations while substantially preserving low-temperature creep resistances of the single crystal alloys.

After the third heating cycle, the diffusion-brazed metal component is then cooled to room temperature (step 22). Suitable cooling rates depend on the alloy of the metal component and the brazing material used, and may range from about 5°C/minute to about 50°C/minute. After cooling, the metal component may then undergo post-brazing steps (e.g., machining).

While method 10 is discussed above with the use of the first, second, and third heating cycles (i.e., steps 16, 18, and 20 of method 10), the present invention may alternatively use different numbers of heating cycles, where each successive heating cycle has a reduced temperature from a previous heating cycle, and a duration that is at least as long as the previous heating cycle. In various embodiments, each successive heating cycle has a duration that is longer than the previous heating cycle. The successive heating cycles allow the brazing alloy to be initially melted at a high temperature (e.g., the first temperatures), and then undergo brazing cycles at lower temperatures. The lower temperatures reduce the coarsening of the γ' phases of the single crystal alloys, thereby allowing the brazing alloys to diffuse for longer durations. This increases the strength of the brazed weld within the crack.

FIG. 2 is a micrograph of metal component 24, which is a brazed low-pressure turbine vane that includes base portion 26, crack 28, and brazed weld 30. The alloy of base portion 26 is a PWA 1484 nickel-based alloy, and the alloy of brazed weld 30 is a PWA 36119 nickel-based brazing alloy. As shown, crack 30 includes walls 32, which contain a mixture of the alloy of brazed weld 30 diffused into the alloy of base portion 26. The diffusion brazing operation was performed with three successive heating cycles, pursuant to method 10 (shown in FIG. 1). Accordingly, crack 28 was initially cleaned and the brazing alloy was deposited within crack 28 (pursuant to steps 12 and 14 of method 10).

Metal component 24 was then placed in a vacuum furnace, and vacuum conditions were obtained (about 0.0001 Torr). Metal component 24 was then exposed to a first temperature of 1200°C (2200°F) for a duration of 30 minutes (pursuant to step 16 of method 10). During this first heating cycle, the brazing alloy melted within crack 28.

After the first duration, the temperature of the vacuum furnace was reduced to a second temperature of 1170°C (2140°F), with metal component 24 remaining in the vacuum furnace during the temperature change. Metal component 24 was then exposed to the second temperature for a second duration of 30 minutes (pursuant to step 18 of method 10). The second duration was measured from time when the vacuum furnace reached the second temperature of 1170°C. During this second heating cycle, the brazing alloy began to diffuse into the alloy of base portion 26 at walls 32.

After the second duration, the temperature of the vacuum furnace was then reduced to a third temperature of 1150°C (2100°F), with metal component 24 remaining in the vacuum furnace during the temperature change. Metal component 24 was then exposed to the third temperature for a third duration of 6 hours (pursuant to step 20 of method 10). The third duration was measured from time when the vacuum furnace reached the third temperature of 1150°C. During this third heating cycle, the brazing alloy continued to diffuse into the alloy of base portion 26 at walls 32.

After the third duration, metal component 24 was removed from the vacuum furnace and was cooled to room temperature at a rate of about 30°C/minute. This solidified the brazing alloy within crack 28, thereby forming brazed weld 30. The γ' phases of the single crystal alloys were measured to have average particle sizes of about 0.52 micrometers. In comparison, the pre-brazed single crystal alloy had a γ'-phase average particle size of about 0.45 micrometers. As such, the brazing operation of method 10 mildly coarsened the γ' phases of the single crystal alloys.

However, the single crystal alloys of metal component 24 repaired by this invention exhibited a rupture life reduction of only 7% and a reduction in time to 2% creep of only 4%, as compared to a standard diffusion brazing operation performed at 1200°C (2200°F) for a duration of 10 hours, which provided a γ'-phase average particle size of about 0.71 micrometers and exhibited a rupture life reduction of 14% and a reduction in time to 2% creep of 18%. Accordingly, the brazing operation of the present invention substantially preserves the low-temperature creep resistances of the single crystal alloys.

Although the present invention has been described with reference to preferred embodiments, workers skilled in the art will recognize that changes may be made in form and detail without departing from the scope of the invention.

## Claims

1. A method for repairing a metal component (24) having a crack (28), the method comprising:
depositing a brazing material into the crack (28) of the metal component (24);
exposing the metal component (24) to a plurality of heating cycles, wherein each successive heating cycle has a temperature that is less than a temperature of a previous heating cycle, and a duration that is at least as long as a duration of the previous heating cycle, and wherein the plurality of heating cycles comprises an initial heating cycle having a temperature sufficient to at least substantially melt the brazing material within the crack (28).

2. The method of claim 1, wherein the temperature of the initial heating cycle is at least about 1170°C.

3. The method of claim 1, wherein the temperature of the initial heating cycle is about 1200°C to about 1260°C.

4. The method of claim 1, 2 or 3, wherein the initial heating cycle has a duration of about 45 minutes or less.

5. The method of any preceding claim, wherein the duration of at least one of the heating cycles is longer than the duration of the preceding heating cycle.

6. A method for repairing a metal component (24) having a crack (28), the method comprising:
depositing a brazing alloy into the crack (28) of the metal component (24);
exposing the metal component (24) to a first temperature of at least about 1170°C for a first duration;
exposing the metal component (24) to a second temperature that is less than the first temperature for a second duration that is at least as long as the first duration; and
exposing the metal component (24) to a third temperature that is less than the second temperature for a third duration that is at least as long as the second duration.

7. The method of claim 6, wherein the first temperature is about 1200°C to about 1260°C.

8. The method of claim 6 or 7, wherein the second temperature is about 1150°C to about 1200°C.

9. The method of claim 6, 7 or 8, wherein the third temperature is about 1090°C to about 1150°C.

10. The method of any of claims 6 to 9, wherein the first duration is about 45 minutes or less.

11. The method of any of claims 6 to 10, wherein the second duration is longer than the first duration.

12. The method of any of claims 6 to 11, wherein the second duration is about 15 minutes to about 90 minutes.

13. The method of any of claims 6 to 12, wherein the third duration is longer than the second duration.

14. The method of any of claims 6 to 13, wherein the third duration is at least about 4 hours.

15. A method for repairing a metal component (24) having a crack (28), the method comprising:
depositing a brazing alloy into the crack (28);
exposing the metal component to a temperature of about 1170°C to about 1260°C for a first duration of about 45 minutes or less;
exposing the metal component to a temperature of about 1150°C to about 1200°C for a second duration of about 15 minutes to about 90 minutes; and
exposing the metal component to a temperature of about 1090°C to about 1150°C for a third duration of at least about 4 hours.

16. The method of claim 15, wherein the first duration is about 15 minutes to about 30 minutes.

17. The method of claim 15 or 16, wherein the second duration is about 30 minutes to about 60 minutes.

18. The method of claim 15, 16 or 17, wherein the third duration is about 5 hours to about 7 hours.

19. The method of any preceding claim, wherein the metal component (24) is derived from a single crystal alloy.
